# EUROPÄISCHE PATENTANMELDUNG

(11) **EP 1 215 638 A2**
(43) Veröffentlichungstag der Anmeldung: **19.06.2002**
(21) Anmeldenummer: 01126333.2
(22) Anmeldetag: 06.11.2001
(51) Int. Cl.: G08B 19/02, B60R 1/12

(54) **Sicherheitsvorrichtung für Fahrzeuge**

(30) Priorität: 15.12.2000 DE 10062655
(71) Anmelder: MEKRA Lang GmbH & Co. KG, 90765 Fürth (DE)
(72) Erfinder: Lang, Heinrich, 91465 Ergersheim (DE); Witzke, Michael, 91522 Ansbach (DE)
(74) Vertreter: Winter, Brandl, Fürniss, Hübner, Röss, Kaiser, Polte Partnerschaft

(57) **Zusammenfassung**

Beschrieben wird eine Sicherheitsvorrichtung für Fahrzeuge, insbesondere Nutzfahrzeuge, mit einem an einer Fahrzeugkarosserie befestigten Außenrückspiegel (4, 6), der ein Spiegelgehäuse (8) mit wenigstens einer darin angeordneten Spiegelscheibe (10) umfaßt, wobei im Bereich des Spiegelgehäuses (8) wenigstens ein die Fahrbahnoberflächentemperatur berührungslos messender Sensor angeordnet ist. In einer Ausführungsform ist der die Fahrbahnoberflächentemperatur berührungslos messende Sensor kombiniert mit einer die momentane Fahrzeugposition erfassenden Recheneinrichtung, insbesondere GPS-Einrichtung; einer Speichereinrichtung zum Abspeichern von Straßenabschnitten, die bei bestimmten Temperaturbedingungen für das Fahrverhalten des Fahrzeugs (2) kritisch sind; und einer Anzeige- oder Warneinrichtung zur Ausgabe eines optischen und/oder akustischen Warnsignals an den Fahrer, wenn die vom Sensor gemessene Fahrbahnoberflächentemperatur und/oder Umgebungs- oder Lufttemperatur vor Erreichen des kritischen Straßenabschnitts einen bestimmten Wert unter- oder überschreitet.

## Beschreibung

Die Erfindung betrifft eine Sicherheitsvorrichtung für Fahrzeuge, insbesondere Nutzfahrzeuge.

Es sind Sensoren bekannt, welche berührungslos die Fahrbahnoberflächentemperatur messen können. Eingesetzt werden derartige Sensoren beispielsweise bei Räum- und Streufahrzeugen der Winterdienste, um anhand der Fahrbahnoberflächentemperatur (und gegebenenfalls auch der Umgebungs- oder Lufttemperatur) die Wahrscheinlichkeit einer möglichen Fahrbahnvereisung extrapolieren zu können, so daß die Abgabe von Streusalz oder anderen Taumitteln oder auch von Split besser dem jeweiligen tatsächlichen Bedarf angepaßt werden kann.

Die Erfindung schlägt nun vor, wenigstens einen derartigen, die Fahrbahnoberflächentemperatur berührungslos messenden Sensor im Bereich des Spiegelgehäuses eines Außenrückspiegels anzuordnen.

Bevorzugt arbeitet der die Fahrbahnoberflächentemperatur berührungslos messende Sensor auf Infrarotbasis, d.h. der Sensor erfaßt von der Fahrbahnoberfläche emittierte Temperaturstrahlung im Infrarot. Derartige Infrarot-Temperatursensoren, welche berührungslos arbeiten, sind mittlerweile in der Lage, mit sehr hoher Genauigkeit über einen weiten Temperaturbereich zu messen.

Die vom Sensor gemessene Temperatur wird dem Fahrer des Fahrzeuges bevorzugt visuell dargestellt oder angezeigt. Hierbei kann die Darstellung gemäß einer Ausführungsform oder -möglichkeit im Bereich des Spiegelgehäuses erfolgen. Eine andere Möglichkeit ist es, die Darstellung im Bereich des Armaturenbretts des Fahrzeuges vorzunehmen.

Erfolgt die Darstellung oder Anzeige im Bereich des Spiegelgehäuses, ist eine Ausführungsmöglichkeit, die Anzeige direkt in der Fläche der Spiegelscheibe des Rückspiegels zu integrieren. Gemäß einer anderen Ausführungsmöglichkeit kann die Anzeige in dem die Spiegelfläche einfassenden Rand des Spiegelgehäuses erfolgen, und weiterhin ist es möglich, die Anzeige in einem im Blickfeld des Fahrers liegenden Bereich des Spiegelgehäuses vorzunehmen.

In allen Fällen kann die vom Sensor berührungslos erfaßte Fahrbahnoberflächentemperatur dem Fahrer in einer gut sichtbaren Weise dargestellt werden.

Die Anzeige selbst kann auf verschiedene Arten erfolgen, beispielsweise in Form eines direkt ablesbaren Dezimalwertes (mit entsprechendem positivem oder negativem Vorzeichen), in Form eines Analogwertes, beispielsweise auf einer kreis- oder säulenförmigen Skala, entlang der sich ein Zeiger bewegt, oder über mehrere lichtemittierende Elemente, beispielsweise LEDs, wobei im Falle von LEDs die Anzeige bei Bedarf auf drei Aussagen reduziert werden kann, nämlich "keine Gefahr (z.B. Glatteisgefahr)" (z.B. grüne LED), "Gefahr unter bestimmten Bedingungen möglich" (z.B. gelbe LED) und "Gefahr" (z.B. rote LED). Auch kann die Anzeige in Form eines zumindest zweifarbigen, aus mehreren lichtemittierenden Elementen aufgebauten Leuchtbalkens etc. erfolgen.

Beim Unter- und/oder Überschreiten eines Grenzwertes der Temperatur kann weiterhin bevorzugt ein zusätzlicher Alarm, insbesondere ein akkustischer Alarm ausgegeben werden. Der Grenzwert oder die Grenzwerte, bei dem oder bei denen der zusätzliche Alarm ausgegeben wird, ist oder sind bevorzugt einstellbar.

Bevorzugt mißt der Sensor zusätzlich zur Fahrbahnoberflächentemperatur auch die Umgebungs- oder Lufttemperatur. Die Aussagegenauigkeit hinsichtlich beispielsweise einer möglichen Glatteisgefahr kann hierdurch verbessert werden.

Die Temperaturmeßwerte vom Sensor können weiterhin aufzeichen- oder speicherbar sein. Hierdurch ist es beispielsweise möglich, ein Temperaturprofil einer bestimmten Fahrbahnstrecke zu erstellen, aus welchem sich Rückschlüsse über mögliche Gefahrenpunkte ziehen lassen. Die Temperaturmeßwerte können auch über Funk an eine zentrale Speicher- und/oder Auswerteeinheit, beispielsweise in der Winterdienstzentrale, der Straßenmeisterei etc. übertragbar sein.

Die Ausrichtung des Sensors bezüglich der Fahrbahnoberfläche ist bevorzugt einstellbar, um zu vermeiden, daß Teile der Karosserie, eines Rades, beispielsweise bei Lenkeinschlag, etc. in den Erfassungsbereich des Sensors gelangen und hierdurch möglicherweise das Meßergebnis verfälschen.

Eine weitere bevorzugte Ausgestaltung der erfindungsgemäßen Sicherheitsvorrichtung, besteht aus wenigstens einem an einem Fahrzeug angeordneten, die Fahrbahnoberflächentemperatur berührungslos messenden Sensor; einer die momentane Fahrzeugposition erfassenden Recheneinrichtung, insbesondere GPS-Einrichtung; einer Speichereinrichtung zum Abspeichern von Straßenabschnitten, die bei bestimmten Temperaturbedingungen für das Fahrverhalten des Fahrzeugs kritisch sind; und einer Anzeige- oder Warneinrichtung zur Ausgabe eines optischen und/oder akustischen Warnsignals an den Fahrer, wenn die vom Sensor gemessene Fahrbahnoberflächentemperatur und/oder Umgebungs- oder Lufttemperatur vor Erreichen des kritischen Straßenabschnitts einen bestimmten Wert unter- oder überschreitet.

Die Recheneinrichtung kann hierbei gemäß einer weiteren Ausgestaltungsform das Fahrzeug automatisch zwangsverzögern oder -abbremsen, wenn bei Annäherung des Fahrzeugs an den kritschen Straßenabschnitt die vom Sensor gemessene Fahrbahnoberflächentemperatur und/oder Umgebungs- oder Lufttemperatur den bestimmten Wert (Grenzwert) unter- oder überschreitet. Diese Zwangsverzögerung des Fahrzeuges durch die Recheneinrichtung kann weiterhin immer dann erfolgen, wenn der Fahrer das Fahrzeug eine bestimmte Zeitspanne nach Ausgabe der Warnung nicht bereits selbst verzögert oder abbremst.

Weitere Einzelheiten, Aspekte und Vorteile der vorliegenden Erfindung ergeben sich nachfolgend aus einer Beschreibung hiervon unter Bezugnahme auf die Zeichnung.

Es zeigt:
Fig. 1 vereinfacht eine Frontansicht eines mit der erfindungsgemäßen Sicherheitsvorrichtung ausgestatteten Fahrzeugs;
Fig. 2 schematisch vereinfacht eine Ansicht auf eine Spiegelscheibe eines Außenrückspiegels mit mehreren Möglichkeiten der Darstellung oder Anzeige der Temperatur; und
Fig. 3 eine schematische Blockschaltbilddarstellung der erfindungsgemäßen Vorrichtung in Form einer Kombination aus berührungslos messendem Sensor und die Fahrzeugposition erfassender Recheneinrichtung.

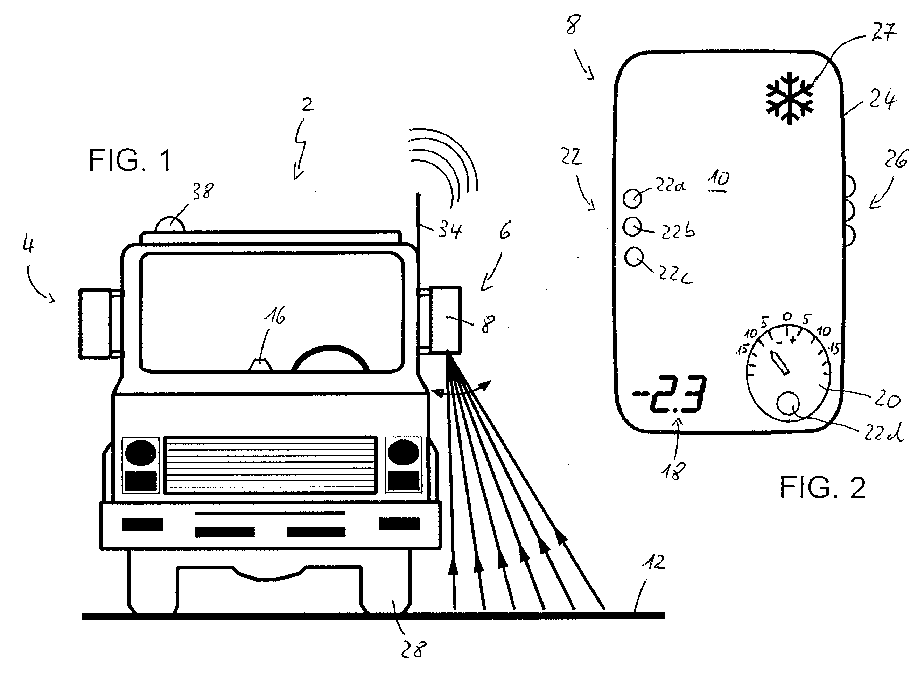

Fig. 1 zeigt vereinfacht eine Frontansicht auf ein Fahrzeug 2, welches im dargestellten Ausführungsbeispiel ein Nutzfahrzeug sein möge. Das Fahrzeug 2 weist in bekannter Weise wenigstens einen, bevorzugt jedoch zwei Außenrückspiegel 4 und 6 auf. Der Rückspiegel 4 sei hierbei auf der Beifahrerseite und der Rückspiegel 6 auf der Fahrerseite angeordnet. Nachfolgend wird alleine der fahrerseitige Außenrückspiegel 6 näher betrachtet. Es versteht sich, daß die nachfolgenden, den Rückspiegel 6 betreffenden Aussagen genausogut auch auf den Rückspiegel 4 zutreffen.

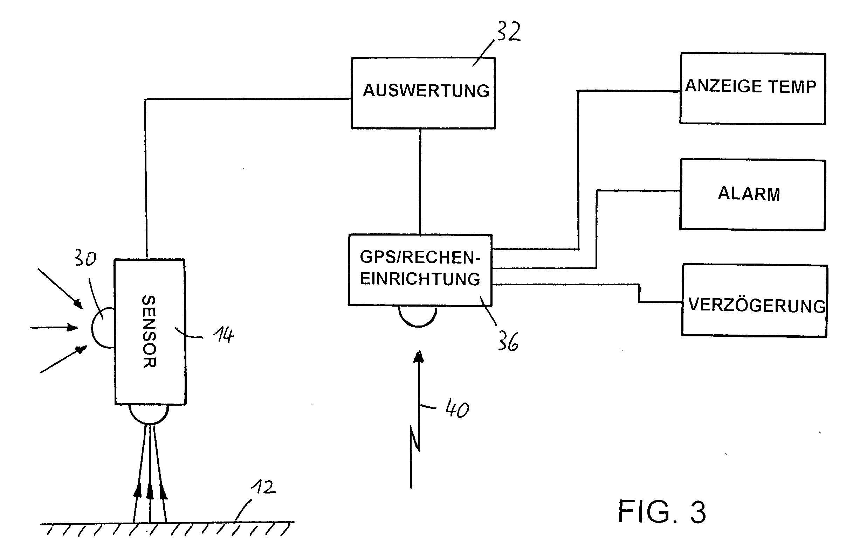

Der Rückspiegel 6 weist ein Spiegelgehäuse 8 auf, welches in bekannter Weise an der Karosserie des Fahrzeuges 2 befestigt ist. Das Spiegelgehäuse 8 dient zur Aufnahme wenigstens einer Spiegelscheibe 10 (Fig. 2). Im Bereich des Spiegelgehäuses 8 ist wenigstens ein die Oberflächentemperatur einer Fahrbahn 12 berührungslos messender Sensor 14 (Fig. 3) angeordnet. Der Sensor 14 ist von an sich bekannter Bauart und arbeitet bevorzugt auf Infrarotbasis, wobei die Fahrbahnoberflächentemperatur aufgrund der sogenannten Graukörperstrahlung erfaßt wird. Es sind mittlerweile Sensoren erhältlich, welche mit einer Genauigkeit von ±1°F arbeiten und einen Meßbereich für die Fahrbahnoberflächentemperatur von -40° bis +95°C haben. Die Abtastung der Fahrbahnoberfläche 12 erfolgt bis zu zehnmal pro Sekunde, so daß hohe Aussagegenauigkeiten hinsichtlich der Temperatur der Fahrbahnoberfläche 12 möglich sind.

Die vom Sensor 14 gemessene Temperatur wird dem Fahrer des Fahrzeuges 2 bevorzugt visuell dargestellt. Hierbei kann die Darstellung entweder im Bereich des Spiegelgehäuses 8 oder im Bereich des Armaturenbretts des Fahrzeuges 2 durch eine dort angebrachte Anzeige 16 erfolgen.

Falls die Temperaturanzeige oder -darstellung im Bereich des Spiegelgehäuses 8 erfolgt, kann gemäß Fig. 2, in der eine Mehrzahl von Anzeigemöglichkeiten dargestellt ist, die Anzeige beispielsweise in dezimaler oder digitaler Form direkt in der Fläche der dortigen Spiegelscheibe 10 erfolgen, wie durch die Anzeige 18 mit "-2,3" veranschaulicht.

Genausogut kann die Anzeige auf einer Skala 20 in analoger Form erfolgen, oder aber durch mindestens ein, vorteilhafterweise eine Mehrzahl von lichtemittierenden Elementen 22, beispielsweise LEDs.

Beispielsweise bei der Verwendung von drei LEDs kann die in Fig. 2 oberste LED 22a grünes Licht emittieren, die darunter liegende LED 22b gelbes Licht und die am weitesten unten liegende LED 22c rotes Licht. Leuchtet die grüne LED 22a, bedeutet dies, daß die Fahrbahnoberflächentemperatur deutlich über einem kritischen Wert oder Grenzwert liegt, leuchtet die LED 22b, bedeutet dies, daß sich die Fahrbahnoberflächentemperatur dem kritischen Wert oder Grenzwert stark angenähert hat, und leuchtet die LED 22c, bedeutet dies, daß der kritische Wert oder Grenzwert unterschritten ist, also beispielsweise akute Glatteisgefahr besteht. Ein derartiges lichtemittierendes Element kann auch in Form einer weiteren LED 22d mit der analogen Anzeige oder Skala 20 kombiniert werden und beispielsweise rot blinken, wenn ein bestimmter kritischer Wert oder Grenzwert unter- oder auch überschritten wird.

Anstelle von drei lichtemittierenden Elementen oder LEDs kann auch eine Balkenanzeige in zumindest zwei Farben verwendet werden, welche ebenfalls eine Aussage über die momentan herrschenden Fahrbahnoberflächentemperaturen zuläßt.

Weiterhin ist es möglich, die lichtemittierenden Elemente 22 in einem Rand 24 des Spiegelgehäuses 8 anzuordnen; besagter Rand 24 müßte dann jedoch gegenüber der Darstellung von Fig. 2 breiter ausgebildet sein.

Weiterhin ist es möglich, beispielsweise LEDs seitlich am Spiegelgehäuse 10 so anzuordnen, daß sie im Blickfeld des Fahrers liegen, das heißt, im Falle des Außenrückspiegels 6 auf der Fahrerseite müßten die LEDs in der Ansicht von Fig. 2 auf der rechten, dem Fahrer zugewandten Seite des Spiegelgehäuses 8 liegen, wie durch die dortigen LEDs 26 veranschaulicht.

Es kann auch ein Symbol als Anzeige verwendet werden, z.B. das in Fig. 2 gezeigte Schnee- oder Eiskristallsymbol 27. Dieses Symbol 27 kann z.B. bei Glatteisgefahr aufleuchten oder blinken oder aber es kann z.B. durch ein Dahinterschalten von drei verschiedenfarbigen LEDs dreifarbig leuchten. Wie im Fall der drei einzelnen LEDs 22a bis 22c bedeutet dann ein grün leuchtendes oder blinkendes Symbol 27, daß die Fahrbahnoberflächentemperatur deutlich über einem kritischen Wert oder Grenzwert liegt, eine gelbes oder oranges Symbol 27 bedeutet, daß sich die Fahrbahnoberflächentemperatur dem kritischen Wert oder Grenzwert stark angenähert hat, und leuchtet oder blinkt das Symbol 27 in rot, bedeutet dies, daß der kritische Wert oder Grenzwert unterschritten ist, also beispielsweise akute Glatteisgefahr besteht.

Im übrigen sind auch Kombinationen der einzelnen Anzeigen 18, 20, 22, 26 und 27 untereinander möglich. Die LEDs 22a bis 22d, die LEDs 26 und die LEDs hinter dem Symbol 27 können Dauerlicht und/oder Blinklicht abgeben.

Zusätzlich zu den einzelnen Anzeigen gemäß Fig. 2 kann bevorzugt im Inneren des Fahrzeuges 2 noch ein akustischer Alarm ausgelöst werden, wenn ein bestimmter Grenzwert oder kritischer Wert der Fahrbahnoberflächentemperatur unter- oder überschritten wird.

Die Ausrichtung des Sensors 14 bezüglich der Oberfläche der Fahrbahn 12 ist bevorzugt zumindest innerhalb eines bestimmten Bereiches einstellbar, wie in Fig. 1 durch den Doppelpfeil veranschaulicht, um sicherzustellen, daß der Sensor 14 ausschließlich die Fahrbahnoberfläche abtastet und nicht Teile der Karosserie des Fahrzeuges 2, oder beispielsweise den im Bereich unterhalb des Rückspiegels 6 liegenden Vorderreifen 28 erfaßt, wenn dieser bei Kurvenfahrt eingeschlagen wird und gegebenenfalls über den Außenumfang oder die Außenkontur der Karosserie des Fahrzeuges 2 vorragt.

Es versteht sich, daß auch eine Mehrzahl von Grenzwerten oder kritischen Werten vorgegeben werden kann, bei deren Unter- und/oder Überschreiten entsprechende visuelle und/oder akustische Signalausgaben erfolgen. Zumindest einer dieser Grenzwerte oder kritischen Werte ist darüber hinaus bevorzugt einstellbar.

Weiterhin bevorzugt mißt der Sensor 14 nicht nur die Temperatur der Oberfläche der Fahrbahn 12, sondern über ein weiteres temperaturempfindliches Element 30 die Umgebungs- oder Außenlufttemperatur, wie in Fig. 3 dargestellt. Diese Temperatur kann dazu herangezogen werden, in einer entsprechenden, mit dem Sensor 14 verbundenen Auswerteeinheit 32 noch genauere Aussagen über die mögliche oder zu erwartende Beschaffenheit der Fahrbahnoberfläche (Glatteisbildung etc.) zu treffen.

Die von dem Sensor 14 oder auch den Sensoren 14 (es können in einem Rückspiegel auch mehrere Sensoren vorhanden sein und/oder beide Außenrückspiegel 4 und 6 sind mit jeweils einem Sensor 14 versehen) kommenden Signale können in einer sich an Bord des Fahrzeuges 2 befindlichen Speichereinrichtung aufzeichen- oder speicherbar sein. Denkbar sind elektronische Speichermedien, elektro/optische Aufzeichnungsmedien oder magnetische Aufzeichnungsmedien, also z.B. ICs, CD-ROMs, Disketten, Magnetbänder etc. Diese aufgezeichneten Temperaturmeßwerte können beispielsweise dazu herangezogen werden, bestimmte Temperaturprofile einer vom Fahrzeug 2 abgefahrenen Strecke zu gewinnen.

Die Temperaturmeßwerte können anstelle hiervon oder auch zusätzlich über eine Sendeanlage 34 an eine entfernte Speicher- und Auswertestation per Funk übertragen werden, beispielsweise zu einer Basis eines Winterdienstes, einer Straßenmeisterei etc.

Fig. 3 zeigt eine weitere bevorzugte Ausgestaltungsform der vorliegenden Erfindung in vereinfachter Blockschaltbilddarstellung.

Hierbei ist ein Sensor oder sind mehrere Sensoren 14 über die für jeden Sensor separat vorgesehene oder auch zentral vorhandene Auswerteeinheit 32 mit einer Recheneinrichtung 36 kombiniert. Die Recheneinrichtung 36 ist in der Lage, die momentane Fahrzeugposition zu erfassen, wobei insbesondere eine sogenannte GPS-Einrichtung verwendet wird, welche in bekannter Weise über einen Empfänger 38 GPS-Signale 40 empfängt und hieraus die momentane Fahrzeugposition bestimmt. Die GPS/Recheneinrichtung 36 verarbeitet die GPS-Signale 40 und die von der Auswerteeinheit 32 oder den Auswerteeinheiten 32 kommenden Temperatursignale des Sensors oder der Sensoren 14.

Weiterhin enthält die Recheneinrichtung 36 eine Speichereinrichtung zum Abspeichern von Straßenabschnitten, die bei bestimmten Temperaturbedingungen für das Fahrverhalten des Fahrzeugs kritisch sind. Die GPS/Recheneinrichtung 36 vergleicht oder korreliert die empfangenen Signale oder Aussagen und Speicherinhalte dahingehend, daß bei Annäherung des Fahrzeuges 2 an den bei bestimmten Temperaturbedingungen für das Fahrverhalten des Fahrzeuges 2 kritischen Straßenabschnitt eine Warnung an den Fahrer ausgegeben wird, wenn die vom Sensor 14 oder von den Sensoren 14 gemessene Fahrbahnoberflächentemperatur und/oder Umgebungstemperatur einen bestimmten Wert unter- oder überschreitet und damit die bestimmte Temperaturbedingung oder bestimmten Temperaturbedingungen erfüllt ist oder erfüllt sind, bei der oder denen der besagte Straßenabschnitt kritisch ist.

Mit anderen Worten, die GPS/Recheneinrichtung 36 ermittelt aus den GPS-Signalen 40 die momentane Fahrzeugposition und denkt quasi voraus, beispielsweise über eine Fahrstrecke von 500 m. Wenn der Recheneinrichtung 36 aufgrund der Signale betreffend die Fahrbahnoberflächentemperatur und des Speicherinhalts betreffend kritische Straßenabschnitte bekannt ist, daß in dem vorausliegenden Straßenabschnitt beispielsweise Glatteisgefahr besteht, kann sie eine Entscheidung oder Aussage dahingehend treffen, daß aufgrund der momentanen Fahrzeugposition die Wahrscheinlichkeit hoch ist, daß aus der latenten Glatteisgefahr 500 m weiter eine akute Glatteisgefahr wird, und den Fahrer entsprechend informieren oder warnen.

Beispielsweise "weiß" die Recheneinrichtung 36, daß 500 m voraus eine Brücke oder Überführung oder ein permanent im Schatten liegendes Waldstück kommt, sich also das Fahrzeug 2 einem Ort nähert, wo bei bestimmten Temperaturbedingungen Gefahr für das Fahrzeug 2 besteht. Wenn nun die Temperatursignale beispielsweise eine latente Glatteisgefahr anzeigen, wird die Recheneinrichtung 36 den Fahrer dahingehend informieren, daß vor dem Fahrzeug eine Stelle oder ein Ort liegt, wo mit hoher Wahrscheinlichkeit mit Glatteisbildung gerechnet werden muß, also aus der bisher latenten Gefahr eine akute Gefahr wird.

Die Recheneinrichtung 26 steuert gemäß Fig. 3 auch die verschiedenen Anzeigen der Temperatur etwa gemäß Fig. 2, gibt bei Bedarf den beispielsweise akustischen Alarm aus und greift gemäß einer weiteren Ausgestaltungsform in das Fahrverhalten des Fahrzeuges ein: Gemäß Fig. 3 kann die GPS/Recheneinrichtung 36 beispielsweise dann in das Fahrverhalten des Fahrzeuges 2 eingreifen, wenn bei Annäherung des Fahrzeuges an den kritischen Straßenabschnitt die vom Sensor 14 gemessene Fahrbahnoberflächentemperatur und/oder Umgebungstemperatur einen bestimmten kritischen Wert oder Grenzwert unter- oder überschreitet. Dieser Eingriff in das Fahrverhalten besteht bevorzugt darin, daß die Recheneinrichtung 36 das Fahrzeug 2 automatisch zwangsverzögert oder -abbremst. Es erfolgt somit über die Recheneinrichtung 36 ein Eingriff in die Motorsteuerung, beispielsweise eine Veränderung des Drosselklappenöffnungsgrades oder dergleichen, um die Fahrtgeschwindigkeit des Fahrzeuges 2 herabzusetzen, wenn Annäherung an einen für das Fahrverhalten des Fahrzeuges kritischen Straßenabschnitt bei bestimmten Temperaturbedingungen vorliegt.

Diese Zwangsverzögerung oder -verlangsamung des Fahrzeuges durch die Recheneinrichtung 36 kann weiterhin zeitverzögert dermaßen erfolgen, daß sie nur dann vorgenommen wird, wenn der Fahrer das Fahrzeug 2 eine bestimmte Zeitspanne nach Ausgabe der (beispielsweise akustischen) Warnung nicht von selbst verzögert, also auf den Warnhinweis nicht reagiert.

Der Gegenstand der vorliegenden Erfindung kann sowohl bei Nutz- als auch bei Personenfahrzeugen für den privaten Gebrauch verwendet werden.

Beschrieben wurde eine Sicherheitsvorrichtung für Fahrzeuge, insbesondere Nutzfahrzeuge, mit einem an einer Fahrzeugkarosserie befestigten Außenrückspiegel, der ein Spiegelgehäuse mit wenigstens einer darin angeordneten Spiegelscheibe umfaßt, wobei im Bereich des Spiegelgehäuses wenigstens ein die Fahrbahnoberflächentemperatur berührungslos messender Sensor angeordnet ist. In einer Ausführungsform ist der die Fahrbahnoberflächentemperatur berührungslos messende Sensor kombiniert mit einer die momentane Fahrzeugposition erfassenden Recheneinrichtung, insbesondere GPS-Einrichtung; einer Speichereinrichtung zum Abspeichern von Straßenabschnitten, die bei bestimmten Temperaturbedingungen für das Fahrverhalten des Fahrzeugs kritisch sind; und einer Anzeige- oder Warneinrichtung zur Ausgabe eines optischen und/oder akustischen Warnsignals an den Fahrer, wenn die vom Sensor gemessene Fahrbahnoberflächentemperatur und/oder Umgebungs- oder Lufttemperatur vor Erreichen des kritischen Straßenabschnitts einen bestimmten Wert unter- oder überschreitet.

## Patentansprüche

1. Sicherheitsvorrichtung für Fahrzeuge, insbesondere Nutzfahrzeuge, mit einem an einer Fahrzeugkarosserie befestigten Außenrückspiegel (4, 6), der ein Spiegelgehäuse (8) mit wenigstens einer darin angeordneten Spiegelscheibe (10) umfaßt,
**dadurch gekennzeichnet, daß**
im Bereich des Spiegelgehäuses (8) wenigstens ein die Fahrbahnoberflächentemperatur berührungslos messender Sensor (14) angeordnet ist.

2. Sicherheitsvorrichtung nach Anspruch 1, **dadurch gekennzeichnet, daß** der Sensor (14) von der Fahrbahnoberfläche emittierte Temperaturstrahlung im Infrarot erfaßt.

3. Sicherheitsvorrichtung nach Anspruch 1 oder 2, **dadurch gekennzeichnet, daß** die vom Sensor (14) gemessene Temperatur dem Fahrer des Fahrzeugs (2) visuell dargestellt wird.

4. Sicherheitsvorrichtung nach Anspruch 3, **dadurch gekennzeichnet, daß** die Darstellung im Bereich des Spiegelgehäuses (8) erfolgt.

5. Sicherheitsvorrichtung nach Anspruch 3 oder 4, **dadurch gekennzeichnet, daß** die Anzeige in der Fläche der Spiegelscheibe (10) erfolgt.

6. Sicherheitsvorrichtung nach Anspruch 3 oder 4, **dadurch gekennzeichnet, daß** die Anzeige in einem die Spiegelfläche einfassenden Rand (24) des Spiegelgehäuses (8) erfolgt.

7. Sicherheitsvorrichtung nach Anspruch 3 oder 4, **dadurch gekennzeichnet, daß** die Anzeige in einem im Blickfeld des Fahrers liegenden Bereich des Spiegelgehäuses (8) erfolgt.

8. Sicherheitsvorrichtung nach Anspruch 3, **dadurch gekennzeichnet, daß** die Darstellung im Bereich des Armaturenbretts erfolgt.

9. Sicherheitsvorrichtung nach zumindest einem der Ansprüche 3 bis 8, **dadurch gekennzeichnet, daß** die Anzeige als Dezimalwert (18) dargestellt wird.

10. Sicherheitsvorrichtung nach zumindest einem der Ansprüche 3 bis 8, **dadurch gekennzeichnet, daß** die Anzeige als Analogwert (20) dargestellt wird.

11. Sicherheitsvorrichtung nach zumindest einem der Ansprüche 3 bis 8, **dadurch gekennzeichnet, daß** die Anzeige über mindestens ein lichtemittierendes Element (22; 22d; 26) erfolgt.

12. Sicherheitsvorrichtung nach zumindest einem der Ansprüche 1 bis 11, **dadurch gekennzeichnet, daß** beim Unter- und/oder Überschreiten eines Grenzwertes der Temperatur ein zusätzlicher Alarm, insbesondere ein akustischer Alarm ausgegeben wird.

13. Sicherheitsvorrichtung nach Anspruch 12, **dadurch gekennzeichnet, daß** der Grenzwert oder die Grenzwerte einstellbar sind.

14. Sicherheitsvorrichtung nach zumindest einem der Ansprüche 1 bis 13, **dadurch gekennzeichnet, daß** der Sensor (14) zusätzlich zur Fahrbahnoberflächentemperatur die Umgebungs- oder Lufttemperatur mißt.

15. Sicherheitsvorrichtung nach zumindest einem der Ansprüche 1 bis 14, **dadurch gekennzeichnet, daß** die Temperaturmeßwerte aufzeichen- oder speicherbar sind.

16. Sicherheitsvorrichtung nach zumindest einem der Ansprüche 1 bis 15, **dadurch gekennzeichnet, daß** die Temperaturmeßwerte über Funk übertragbar sind.

17. Sicherheitsvorrichtung nach zumindest einem der Ansprüche 1 bis 16, **dadurch gekennzeichnet, daß** die Ausrichtung des Sensors (14) bezüglich der Fahrbahnoberfläche (12) einstellbar ist.

18. Sicherheitsvorrichtung, insbesondere nach einem der vorhergehenden Ansprüche, mit
wenigstens einem an einem Fahrzeug (2) angeordneten, die Fahrbahnoberflächentemperatur berührungslos messenden Sensor (14);
einer die momentane Fahrzeugposition erfassenden Recheneinrichtung (36), insbesondere GPS-Einrichtung;
einer Speichereinrichtung zum Abspeichern von Straßenabschnitten, die bei bestimmten Temperaturbedingungen für das Fahrverhalten des Fahrzeugs (2) kritisch sind; und
einer Anzeige- oder Warneinrichtung zur Ausgabe eines optischen und/oder akustischen Warnsignals an den Fahrer, wenn die vom Sensor (14) gemessene Fahrbahnoberflächentemperatur und/oder Umgebungs- oder Lufttemperatur vor Erreichen des kritischen Straßenabschnitts einen bestimmten Wert unter- oder überschreitet.

19. Sicherheitsvorrichtung nach Anspruch 18, **dadurch gekennzeichnet, daß** die Recheneinrichtung (36) das Fahrzeug (2) automatisch zwangsverzögert, wenn bei Annäherung des Fahrzeuges (2) an den kritischen Straßenabschnitt die vom Sensor (14) gemessene Fahrbahnoberflächentemperatur und/oder Umgebungs- oder Lufttemperatur den bestimmten Wert unter- oder überschreitet.

20. Sicherheitsvorrichtung nach Anspruch 19, **dadurch gekennzeichnet, daß** die Zwangsverzögerung des Fahrzeugs (2) durch die Recheneinrichtung (36) erfolgt, wenn der Fahrer das Fahrzeug (2) eine bestimmte Zeitspanne nach Ausgabe des Warnsignals nicht selbst verzögert.
